(19) Europäisches Patentamt / European Patent Office / Office européen des brevets

(11) **EP 4 434 766 A1**

(12) **EUROPEAN PATENT APPLICATION**
published in accordance with Art. 153(4) EPC

(43) Date of publication:
**25.09.2024 Bulletin 2024/39**

(21) Application number: **22895308.9**

(22) Date of filing: **17.10.2022**

(51) International Patent Classification (IPC):
**B60C 9/20** (2006.01)   **B60C 1/00** (2006.01)
**B60C 9/18** (2006.01)   **C08K 5/44** (2006.01)
**C08L 7/00** (2006.01)   **C08L 61/00** (2006.01)
**C08L 101/00** (2006.01)

(52) Cooperative Patent Classification (CPC):
**B60C 1/00; B60C 9/18; B60C 9/20; C08K 5/44; C08L 7/00; C08L 61/00; C08L 101/00;** Y02T 10/86

(86) International application number:
**PCT/JP2022/038612**

(87) International publication number:
**WO 2023/090022 (25.05.2023 Gazette 2023/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.11.2021  JP 2021187283**

(71) Applicant: **Bridgestone Corporation**
**Tokyo 104-8340 (JP)**

(72) Inventors:
• **IIDA Masaki**
  **Tokyo 104-8340 (JP)**
• **YAMAMOTO Ami**
  **Tokyo 104-8340 (JP)**
• **MATSUMOTO Kyohei**
  **Tokyo 104-8340 (JP)**
• **HASEGAWA Yudai**
  **Tokyo 104-8340 (JP)**
• **FUJIWARA Yujiro**
  **Tokyo 104-8340 (JP)**

(74) Representative: **Marks & Clerk LLP**
**15 Fetter Lane**
**London EC4A 1BW (GB)**

(54) **PNEUMATIC TIRE**

(57)    Provided is a pneumatic tire in which rolling resistance is reduced by gauge thinning of a belt, and a reduction in durability in an end of a belt layer and the deterioration of the moist heat resistive adhesiveness of the belt layer are suppressed. Each of the thickness of a first belt layer 5a and the thickness of a second belt layer 5b in the center section of the tire is 1.00 mm or less; when the shortest distance between the code 6b of the second belt layer 5b and the code 6a of the first belt layer 5a in the center section of the tire is set at a, and the shortest distance between the code 6b of the second belt layer 5b in an end and the code 6a of the first belt layer 5a is set at b, a and b satisfy a relationship represented by the following expression: $1.8 \le b/a \le 4.0$; and a coating rubber 7 that coats the first belt layer 5a and the second belt layer 5b includes: a rubber component including natural rubber; a resin component; and a sulfenamide vulcanization accelerator.

FIG. 2

**Description**

TECHNICAL FIELD

The present invention relates to a pneumatic tire (hereinafter also simply referred to as "tire"), and specifically relates to a pneumatic tire in which rolling resistance is reduced by gauge thinning of a belt, and a reduction in durability in an end of a belt layer and the deterioration of the moist heat resistive adhesiveness of the belt layer are suppressed.

BACKGROUND ART

Currently, a belt commonly used as a member for reinforcing a pneumatic tire is configured so that two or more steel belt layers including the rubberized layers of steel cords of which inclined arrangement is performed on the equatorial plane of the tire are principally used to allow the steel cords in these belt layers to intersect each other.

In recent years, demand for reducing the weights of tires has increasingly grown for improvement in the fuel efficiency of automobiles. One of the means for reducing the weight of the tires is a reduction in the weight of a belt. For example, in Patent Document 1, a reduction in the weight of a belt is achieved by using the bundle code of monofilaments, and belt edge separation is suppressed to achieve both lightweight properties and durability by further allowing a rubber layer spacing between the monofilament codes of a first belt layer and a second belt layer in the ends of the second belt layer to be greater than a rubber layer spacing between the monofilament codes of the first belt layer and the second belt layer in the center section of a tire.

RELATED ART DOCUMENT

PATENT DOCUMENT

Patent Document 1: JP2010-163055A

SUMMARY OF THE INVENTION

PROBLEMS TO BE SOLVED BY THE INVENTION

In the future, demand for further enhancing the quality of tires and reducing the weights thereof is expected. However, there is a concern that thinning of a belt for the purpose of reducing the rolling resistance of a tire and reducing the weight thereof results in the deterioration of adhesiveness between codes and coating rubbers in the belt due to atmospheric moisture and the like despite resulting in improvement in rolling resistance.

Thus, an objective of the present invention is to provide a pneumatic tire in which rolling resistance is reduced by gauge thinning of a belt, and a reduction in durability in an end of a belt layer and the deterioration of the moist heat resistive adhesiveness of the belt layer are suppressed.

MEANS FOR SOLVING THE PROBLEMS

As a result of intensive examination for solving the problem described above, the present inventors found that the degradation of adhesiveness between codes and coating rubbers in a belt can be suppressed by using a predetermined material in the coating rubbers for the codes, and the present invention was thus accomplished.

In other words, a pneumatic tire of the present invention is a pneumatic tire including a belt layer including a first belt layer that is placed in an inner side of a tread section in a radial direction of the tire and a second belt layer that is layered on an outer side of the first belt layer in a diametrical direction of the tire, wherein

each of a thickness of the first belt layer and a thickness of the second belt layer in a center section of the tire is 1.00 mm or less,
when a shortest distance between a code of the second belt layer and a code of the first belt layer in the center section of the tire is set at a, and a shortest distance between the code of the second belt layer in an end and the code of the first belt layer is set at b, a and b satisfy a relationship represented by the following expression:

$$1.8 \le b/a \le 4.0$$

and

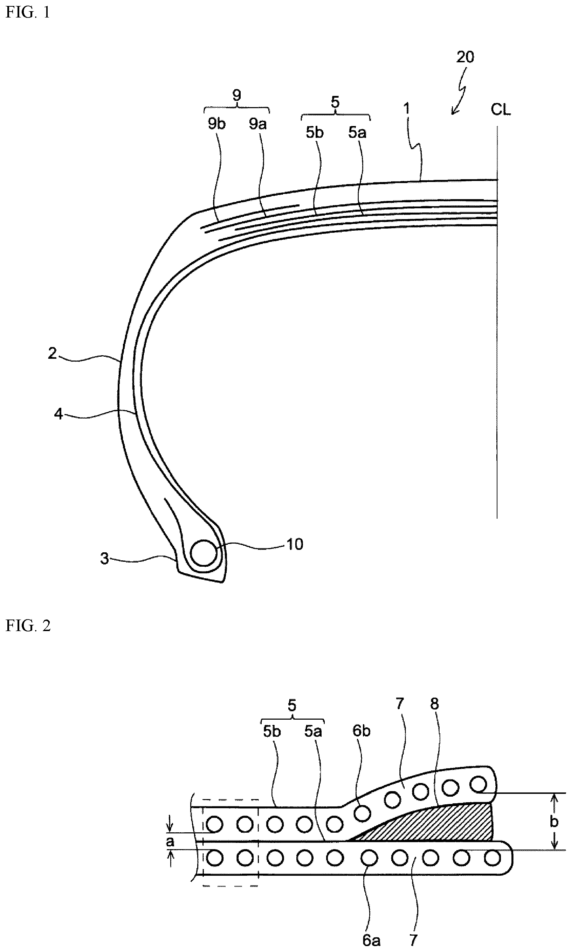

a coating rubber that coats the first belt layer and the second belt layer includes: a rubber component including natural rubber; a resin component; and a sulfenamide vulcanization accelerator. Here, the center section of the tire means a section within a distance that is one-fourth of the ground width of the tire from the equatorial plane of the tire in the width direction of the tire. Moreover, "shortest distance b between code 6b of second belt layer 5b in end and code 6a of first belt layer 5a" substantially represents the shortest distance between the code in the outermost end of the second belt layer and the tangent line (continuous line in FIG. 2) of a plurality of codes aligning in the first belt layer.

In the tire of the present invention, it is preferable that each of a distance from both upper and lower surfaces of the first belt layer in the center section of the tire to a code and a distance from both upper and lower surfaces of the second belt layer in the center section to a code is 0.14 mm or less. In the tire of the present invention, it is preferable that the sulfenamide vulcanization accelerator is N-cyclohexyl-2-benzothiazolylsulfenamide. Further, in the tire of the present invention, it is preferable that an amount of the blended N-cyclohexyl-2-benzothiazolylsulfenamide is 0.1 to 3.0 parts by mass with respect to 100 parts by mass of the rubber component. Further, in the tire of the present invention, it is preferable that a content of N-tert-butyl-2-benzothiazolylsulfenamide is 0.1 parts by mass or less with respect to 100 parts by mass of the rubber component. Further, in the tire of the present invention, it is preferable that the resin component is a phenolic resin. Further, in the tire of the present invention, it is preferable that the phenolic resin is phenol-formaldehyde resin. Further, in the tire of the present invention, it is preferable that an amount of the blended resin component is 0.1 to 10 parts by mass with respect to 100 parts by mass of the rubber component.

EFFECTS OF THE INVENTION

In accordance with the present invention, there can be provided a pneumatic tire in which rolling resistance is reduced by gauge thinning of a belt, and a reduction in durability in an end of a belt layer and the deterioration of the moist heat resistive adhesiveness of the belt layer are suppressed.

BRIEF DESCRIPTION OF THE DRAWINGS

FIG. 1 is a schematic half sectional view of a pneumatic tire according to a preferred embodiment of the present invention.
FIG. 2 is a schematic cross-sectional view of an end of the belt of the pneumatic tire according to the preferred embodiment of the present invention.
FIG. 3 is a schematic cross-sectional view of the center section of the belt of the pneumatic tire according to the preferred embodiment of the present invention.

MODE FOR CARRYING OUT THE INVENTION

A pneumatic tire of the present invention is described in detail below with reference to the drawings.
FIG. 1 is a schematic half sectional view of a pneumatic tire according to a preferred embodiment of the present invention. In the illustrated tire 20, a tread section 1, a side wall section 2, and bead sections 3 are reinforced by a carcass 4 including a carcass layer that toroidally extends from one bead section 3 to the other bead section 3. Moreover, the tread section 1 is reinforced by a belt 5 including at least two layers, two layers which are a first belt layer 5a and a second belt layer 5b in the illustrated example, disposed in the outer side of the crown area of the carcass 4 in the diametrical direction of the tire. It is to be noted that, in the tire 20 of the present invention, the carcass layers of the carcass 4 may be plural.
The tire 20 of the present invention includes the belt 5 formed by successively layering the first belt layer 5a placed in the inner side of the tread section 1 in the radial direction of the tire and the second belt layer 5b layered on the outer side of the first belt layer 5a in the diametrical direction of the tire. In addition, each of the thickness of the first belt layer 5a and the thickness of the second belt layer 5b in the center section of the tire is 1.00 mm or less, preferably 0.90 mm or less, in the tire 20 of the present invention. FIG. 2 illustrates a schematic cross-sectional view of an end of the belt of the pneumatic tire according to the preferred embodiment of the present invention. Rolling resistance can be reduced by setting the thickness of each belt layer in the center section at 1.00 mm or less as described above. It is to be noted that the belt may include three or more belt layers although the belt 5 includes the two belt layers in the illustrated example.
As illustrated, a belt layer commonly includes a rubber-steel cord composite in which steel cords (codes 6a, 6b) aligned in parallel are coated with coating rubbers 7. In the tire 20 of the present invention, the structure of the steel cords thereof is not particularly limited, and the steel cords may be a plurality of steel monofilaments aligned without being twisted, or may be a bundle code obtained by bundling a plurality of steel filaments (hereinafter also simply referred to as "filaments") aligned without being twisted, as well as may have a $1 \times N$ structure such as a $1 \times 2$ structure, a $1 \times 3$ structure, or a $1 \times 5$ structure, or an $N + M$ structure such as a $1 + 1$ structure, a $2 + 1$ structure, a $2 + 2$ structure, or a $2 + 3$ structure, from the viewpoint of allowing the thickness of the center section of the tire in the belt layers 5a, 5b to be 1.00 mm or less. Preferred are a $1 \times 2$ structure, a $1 \times 5$ structure, a $2 + 3$ structure, steel monofilaments, and a bundle code.

In the tire 20 of the present invention, the steel cords 6a, 6b (hereinafter also simply referred to as "codes") preferably have a $1 \times N$ structure in which N filaments are twisted (N is an integer selected from 2 to 6) from the viewpoint of effectively achieving both improvement in the durability of the tire and a reduction in rolling resistance. In particular, the codes 6a, 6b more preferably have a $1 \times 2$ structure in a tire having a tire load index of less than 100, and the codes 6a, 6b more preferably have a $1 \times 5$ structure in a tire having a tire load index of 100 or more. Moreover, it is also preferable that the codes 6a, 6b are monofilaments which are aligned in parallel without being twisted with each other from a similar viewpoint. Moreover, in the case of the $1 \times N$ structure, the codes 6a, 6b can have a $1 \times N$ open structure in which filaments are twisted at a spacing from each other without coming into contact with each other. A code having an open structure is superior in fatigue resistance to a code in which filamented are twisted while coming into contact with each other.

It is to be noted that a code of having a $1 \times N$ open structure may be formed by sandwiching unvulcanized rubber between filaments and twisting them together, or may be formed by coating unvulcanized rubber on the surfaces of filaments and then twisting them.

Moreover, in a code having a $1 \times N$ open structure, filaments can also be subjected to patterning in advance, and twisted. In the case of the patterning in advance, the patterning pitch of the filaments is preferably in a range of 8 mm or more and 16 mm or less. When the patterning pitch is in this range, rubber permeation performance can be enhanced to further improve durability.

Moreover, a ratio Sf/Sc between the cross-sectional area Sf of filaments in a cross section of a code and the area Sc of the circumscribed circle of the cross section of the code is preferably in a range of 0.4 or more and 0.7 or less. When Sf/Sc is in this range, rubber permeation performance can be enhanced to further improve durability.

In the filaments included in the codes 6a, 6b according to the present invention, the surfaces of the filaments may be surface-treated in the case of wire drawing. In this case, the amount of phosphoric acid on the surface-treated surfaces of the filaments is preferably 2.0 mg/m$^2$ or less. When the amount of phosphoric acid on the surfaces of the filaments is 2.0 mg/m$^2$ or less, adhesive strength between the filaments and the coating rubbers becomes favorable.

A method of producing filaments included in the codes 6a, 6b according to the present invention is not particularly limited. The above-described filaments may be obtained, for example, by refining iron ore and drawing wires, by refining waste iron scrap and drawing wires, or by recycling steel extracted from a tire.

In the tire 20 of the present invention, filaments including steel as a main component and slight amounts of various inclusions such as carbon, manganese, silicon, phosphorus, sulfur, copper, and chromium can be used as the steel filaments. Moreover, it is preferable to use filaments having a tensile strength of 2700 N/mm$^2$ or more.

Moreover, it is preferable that the steel filaments included in the steel cords 6a, 6b have plated layers formed on their surfaces by a usual method in the tire 20 of the present invention. Examples of the plated layers include zinc-plated layers, copper-plated layers, brass-plated layers, and plated layers including copper, zinc and cobalt (three-element plated layers) without particular limitation, and of these, brass-plated layers and three-element plated layers are preferred from the viewpoint of adhesiveness with the rubber.

It is to be noted that the outermost surface of the steel cord with the brass plating may include cobalt, in this case, when the above-described rubber composition is blended with cobalt, its amount can be reduced, for example, cobalt may be included in an amount of less than 0.04 parts by mass with respect to 100 parts by mass of the rubber component, or cobalt need not be blended. In this case, the deterioration of physical properties in the coating rubbers can be effectively suppressed, and the cost can also be reduced. From such a viewpoint, it is desirable to include no cobalt.

Moreover, when the shortest distance between the code 6b of the second belt layer 5b and the code 6a of the first belt layer 5a in the center section of the tire is set at a, and the shortest distance between the code 6b of the second belt layer 5b in the end and the code 6a of the first belt layer 5a is set at b, a and b satisfy a relationship represented by the following expression:

$$1.8 \leq b/a \leq 4.0$$

in the tire 20 of the present invention. In such a manner, strain in the belt end is inhibited to improve belt edge separation resistance by increasing the spacing between the respective codes of the first belt layer 5a and the second belt layer 5b in the belt end which is an origin of belt edge separation. Belt edge separation durability can be sufficiently improved by allowing b/a to be 1.8 or more. Moreover, sufficient low rolling resistance can be secured by allowing b/a to be 4.0 or less. Preferred is:

$$1.8 \leq b/a \leq 3.8.$$

It is to be noted that in order to increase the spacing between the respective codes of the first belt layer 5a and the second belt layer 5b in the belt end, an interbelt rubber 8 is placed between the first belt layer 5a and the second belt layer 5b in the illustrated example; however, the thicknesses of the coating rubbers 7 in the ends of the belt layers 5a, 5b may be increased, or the ends of the belt layers 5a, 5b may be wrapped with other rubber sheets. Moreover, the same rubber as the coating rubbers 7 of the first belt layer 5a and the second belt layer 5b can be used in the interbelt rubber 8 or the rubber sheets that wrap the ends of the belt layers 5a, 5b.

Further, in the tire 20 of the present invention, the coating rubbers 7 that coat the first belt layer 5a and the second belt layer 5b includes: a rubber component including natural rubber; a resin component; and a sulfenamide vulcanization accelerator. In the tire 20 of the present invention, the thicknesses of the first belt layer 5a and the second belt layer 5b in the center section of the tire are allowed to be 1.00 mm or less. Therefore, adhesive layers between the codes 6a, 6b and the coating rubbers 7 in the first belt layer 5a and the second belt layer 5b are degraded due to the influence of oxygen and moisture inside and outside the tire, whereby the durability of the tire 20 is deteriorated. However, the deterioration of moist heat resistive adhesiveness due to the degradation of such adhesive layers can be suppressed by using the sulfenamide vulcanization accelerator as a vulcanization accelerator for the coating rubbers 7 of the first belt layer 5a and the second belt layer 5b.

Examples of the sulfenamide vulcanization accelerator include N-cyclohexyl-2-benzothiazolylsulfenamide, N,N-dicyclohexyl-2-benzothiazolylsulfenamide, N-tert-butyl-2-benzothiazolylsulfenamide, N-oxydi ethyl ene-2-benzothiazolylsulfenamide, N-methyl-2-benzothiazolylsulfenamide, N-ethyl-2-benzothiazolylsulfenamide, N-propyl-2-benzothiazolylsulfenamide, N-butyl-2-benzothiazolylsulfenamide, N-pentyl-2-benzothiazolylsulfenamide, N-hexyl-2-benzothiazolylsulfenamide, N-heptyl-2-benzothiazolylsulfenamide, N-octyl-2-benzothiazolylsulfenamide, N-2- ethylhexyl-2-benzothiazolylsulfenamide, N-decyl-2-benzothiazolylsulfenamide, N-dodecyl-2-benzothiazolylsulfenamide, N-stearyl-2-benzothiazolylsulfenamide, N,N-dimethyl-2-benzothiazolylsulfenamide, N,N-diethyl-2-benzothiazolylsulfenamide, N,N-dipropyl-2-benzothiazolylsulfenamide, N,N-dibutyl-2-benzothiazolylsulfenamide, N,N-dipentyl-2-benzothiazolylsulfenamide, N,N-dihexyl-2-benzothiazolylsulfenamide, N,N-diheptyl-2-benzothiazolylsulfenamide, N,N-dioctyl-2-benzothiazolylsulfenamide, N,N-di-2-ethylhexyl benzothiazolylsulfenamide, N,N-didecyl-2-benzothiazolylsulfenamide, N,N-didodecyl-2-benzothiazolylsulfenamide, and N,N-distearyl-2-benzothiazolylsulfenamide. Of these, N-cyclohexyl-2-benzothiazolylsulfenamide is preferred in the tire 20 of the present invention.

It is to be noted that in the tire 20 of the present invention, the coating rubbers 7 may include another vulcanization accelerator to such a degree that the effects of the present invention are not inhibited. Examples of the other vulcanization accelerator include guanidine, thiuram, thiazole, aldehydeamine, and thiocarbamate vulcanization accelerators.

The rubber component including natural rubber and a resin component used in the coating rubber 7 are not particularly limited. For example, diene rubbers such as isoprene rubber (IR), epoxidized natural rubber, styrene-butadiene rubber (SBR), butadiene rubber (BR, high-cis BR, and low-cis BR), nitrile rubber (NBR), hydrogenated NBR, and hydrogenated SBR, and hydrogenated products thereof; olefinic rubbers such as ethylenepropylene rubber (EPDM, EPM), maleic acid-modified ethylene propylene rubber (M-EPM), butyl rubber (IIR), isobutylene-aromatic vinyl or diene monomer copolymers, acrylic rubber (ACM), and ionomers; halogen-containing rubbers such as Br-IIR, Cl-IIR, bromides (Br-IPMS) of isobutylene/para-methylstyrene copolymers, chloroprene rubber (CR), hydrin rubber (CHR), chlorosulfonated polyethylene rubber (CSM), chlorinated polyethylene rubber (CM), and maleic acid-modified chlorinated polyethylene rubber (M-CM); silicon rubbers such as methyl vinyl silicon rubber, dimethyl silicon rubber, and methyl phenyl vinyl silicon rubber; sulfur-containing rubbers such as polysulfide rubber; fluoro-rubbers such as vinylidene fluoride rubber, fluorine-containing vinyl ether rubber, tetrafluoroethylene-propylene rubber, fluorine-containing silicon rubber, and fluorine-containing phosphazene rubber; and thermoplastic elastomers such as styrenic elastomers, olefinic elastomers, ester elastomers, urethane elastomers, and polyamide elastomers can be preferably used as rubber components except the natural rubber.

It is to be noted that the content rate of the natural rubber in the rubber component is preferably 70% by mass or more, more preferably 80% by mass or more, still more preferably 90% by mass or more, and particularly preferably 100% by mass.

The resin component improves the tackiness of the coating rubbers 7, improves the belt edge separation resistance of the coating rubbers 7, and can further suppress the deterioration of the moist heat resistive adhesiveness due to the degradation of the adhesive layer. As the resin component, various natural resins and synthetic resins can be used, and rosin resins, terpene resins, petroleum resins, phenolic resins, coal resins, xylene resins, and the like are preferably used. In the tire 20 of the present invention, a phenolic resin is preferred as the resin component, and a phenol resin is not particularly limited, and can be appropriately selected depending on demanded performance. Examples thereof include phenol resins produced by condensation reaction of phenols such as phenol, cresol, resorcin, and tert-butylphenol, or mixtures thereof, and formaldehyde in the presence of acid catalysts such as hydrochloric acid and oxalic acid. Moreover, a modified phenol resin can be used, and such a phenol resin can be modified by an oil such as, for example, rosin oil, tall oil, cashew oil, linolic acid, oleic acid, or linolenic acid. The phenol resins may be included singly, or may be included in mixture of a plurality of kinds thereof. Of these, a phenol formaldehyde resin is particularly preferred. It is to be noted that in the tire 20 of the present invention, these resins may be used singly, or in combination of two or more kinds thereof. In combination of two or more kinds thereof, a combination of a phenolformaldehyde resin and an alkylphenol resin is preferred.

The alkylphenol resin is obtained by, for example, condensation reaction of an alkylphenol and formaldehyde under a catalyst. Commercially available alkyl phenol resins can be used, and examples thereof include trade name "Hitanol 1502P" (alkylphenol formaldehyde resin, manufactured by Hitachi Chemical Company, Ltd.), trade name "TACKIROL 201" (alkylphenol formaldehyde resin, manufactured by Taoka Chemical Co., Ltd.), trade name "TACKIROL 250-I" (brominated alkylphenol formaldehyde resin, manufactured by Taoka Chemical Co., Ltd.), trade name "TACKIROL 250-III" (brominated alkylphenol formaldehyde resins, manufactured by Taoka Chemical Co., Ltd.), and trade names "R7521P" "SP1068" "R7510PJ" "R7572P", and "R7578P" (manufactured by SI GROUP INC.).

The rubber composition according to the present invention preferably includes a methylene donor as well as the phenol resin. The inclusion of the melamine donor allows the melamine donor to function as an agent for curing a phenol resin, and can result in improvement in the belt edge separation resistance of the coating rubbers 7.

The kind of the methylene donor is not particularly limited, and can be appropriately selected depending on demanded performance. Examples thereof include hexamethylenetetramine, hexamethoxymethylolmelamine, pentamethoxymethylolmelamine, hexamethoxymethylmelamine, pentamethoxymethylmelamine, hexaethoxymethylmelamine, hexakis-(methoxymethyl)melamine, N,N',N"-trimethyl-N,N',N"-trimethylolmelamine, N,N',N"-trimethylolmelamine, N-methylolmelamine, N,N'-(methoxymethyl)melamine, N,N',N"-tributyl- N,N',N"-trimethylolmelamine, and paraformaldehyde. Of these, the methylene donor is preferably at least one selected from the group consisting of hexamethylenetetramine, hexamethoxymethylmelamine, hexamethoxymethylolmelamine, and paraformaldehyde. It is to be noted that these methylene donors may be used singly, or in combination of two or more kinds thereof.

Moreover, the rate of the content of the phenol resin with respect to the content of the methylene donor is preferably 0.6 to 7, more preferably 1 to 5, from the viewpoint of improvement in the belt edge separation resistance of the coating rubbers 7.

It is to be noted that in the tire 20 of the present invention, commonly, the coating rubbers 7 of the first belt layer 5a and the second belt layer 5b can be appropriately blended with sulfur, carbon black, an anti-aging agent, zinc oxide, stearic acid, and/or the like, usually used in rubber products such as tires.

The amount of the blended resin component in the coating rubbers 7 of the first belt layer 5a and the second belt layer 5b according to the tire 20 of the present invention is preferably 0.1 to 10 parts by mass with respect to 100 parts by mass of the rubber component. Moreover, the amount of the blended sulfenamide vulcanization accelerator is preferably 0.1 to 3.0 parts by mass with respect to 100 parts by mass of the rubber component. By allowing these blending amounts to be in the ranges described above, the deterioration of the moist heat resistive adhesiveness of the first belt layer 5a and the second belt layer 5b can be prevented, and the rolling resistance of the tire can be reduced.

It is to be noted that N- cyclohexyl-2-benzothiazolylsulfenamide is preferred as the sulfenamide vulcanization accelerator in the tire 20 of the present invention. Therefore, the amount of blended N-cyclohexyl-2-benzothiazolylsulfenamide is preferably allowed to be 0.1 to 3.0 parts by mass with respect to 100 parts by mass of the rubber component, it is preferable that another sulfenamide vulcanization accelerator such as N-tert-butyl-2-benzothiazolylsulfenamide is not substantially included, and, for example, 0.1 parts by mass or less with respect to 100 parts by mass of the rubber component is preferred.

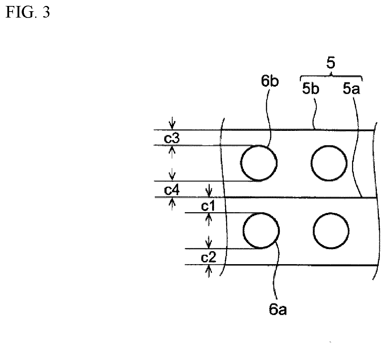

FIG. 3 is a schematic cross-sectional view of the center section of the belt of the pneumatic tire according to the preferred embodiment of the present invention, which is a section enclosed with the dashed line in FIG. 2. It is preferable that in the tire 20 of the present invention, each of distances c1, c2 from both the upper and lower surfaces of the first belt layer 5a in the center section of the tire to the code 6a is 0.14 mm or less, and each of distances c3, c4 from both the upper and lower surfaces of the second belt layer 5b in the center section of the tire to the code 6b is 0.14 mm or less. Such a configuration can result in sufficient improvement in the low rolling resistance of the tire 20. Moreover, in the tire 20 of the present invention, the above-described rubbers are used as the coating rubbers 7 of the first belt layer 5a and the second belt layer 5b, and therefore, moist heat resistive adhesiveness can be secured even when the thicknesses c1, c2, c3, and c4 are allowed to ne 0.14 mm or less.

In the tire 20 of the present invention, it is important to allow the configuration of the belt 5 to be as described above, the other specific structure and material of the tire are not particularly limited, and a known structure and material can be adopted. For example, the belt layers 5a, 5b can be placed to incline, for example, at an angle of 15 to 40° with respect to the circumferential direction of the tire. Moreover, organic fiber codes that extend in a direction that is substantially orthogonal to the circumferential direction of the tire, for example, at an angle of 70 to 90° can be used in the carcass 4. Moreover, organic fiber codes that are arranged substantially in parallel to the circumferential direction of the tire can be used in belt reinforcing layers 9 (cap layer 9a and layered layer 9b).

In the tire 20 of the present invention, the belt reinforcing layers 9 are elements formed by coating the organic fiber codes (reinforcing materials), arranged substantially in parallel to the circumferential direction of the tire (for example, at an angle of 0 to 5° with respect to the circumferential direction of the tire), with rubber (elastomer) in a case in which the belt reinforcing layers 9 are included in the outer sides of the belts 5 in the diametrical direction of the tire. The belt reinforcing layers 9 can be formed by consecutively helically winding strips with narrow widths, prepared by coating the organic fiber codes with the elastomer, in the circumferential direction of the tire.

The organic fiber codes that are applied to the belt reinforcing layers 9 are preferably organic fiber codes having a cutting strength of 6.5 cN/dtex or more, a cutting elongation of 10% or more, and an elastic modulus of 6.0 mN/(dtex·%) or more in an elongation of 7%. Here, the cutting strength, the cutting elongation, and the elastic modulus in an elongation of 7% are values measured at room temperature (23°C), and the various physical properties of the organic fiber codes can be measured according to "Testing methods for man-made filament yarns" in JIS L 1013. Moreover, the elastic modulus in an elongation of 7% is calculated by converting the inclination of a tangent (N/%) at a point corresponding to an elongation of 7% in the load-elongation curve of the codes into a value per dtex.

The organic fiber codes having a cutting strength of 6.5 cN/dtex or more, a cutting elongation of 10% or more, and an elastic modulus of 6.0 mN/(dtex·%) or more in an elongation of 7% each have high strength in cutting, a great elongation in cutting, and a high elastic modulus in an elongation of 7%, and therefore, the handling stability of the tire can be improved while suppressing a reduction in plunger durability due to application of a belt layer including, for example, metal monofilaments by applying the organic fiber codes having such physical properties to the belt reinforcing layers 9 to compensate the rigidity of the belts 5.

The material of the organic fiber codes is not particularly limited, and examples thereof include: polyesters such as polyethylene terephthalate (PET) and polyethylene naphthalate (PEN); nylons such as 6-nylon, 6,6-nylon, and 4,6-nylon; and celluloses such as rayon and lyocell. Of these, polyethylene terephthalate is preferred, that is, the organic fiber codes as the reinforcing materials of the belt reinforcing layers are preferably codes including polyethylene terephthalate (hereinafter may be simply referred to as "polyethylene terephthalate code"). Such a polyethylene terephthalate code has higher rigidity than a nylon code that is commonly used, and has an excellent effect of improving the plunger durability and handling stability of a tire. It is to be noted that not only they but also organic fibers such as aromatic polyamide (aramid), ZYLON (registered trademark) (polyparaphenylene benzobisoxazole (PBO) fiber), aliphatic polyamide (nylon), and polyketone, and the like can be used as the organic fiber codes.

The organic fiber codes preferably have an elastic modulus of 2.5 mN/(dtex·%) or more measured at 160°C at a load of 29.4 N. Here, the elastic modulus measured at 160°C at a load of 29.4 N is calculated by converting the inclination of a tangent (N/%) at a point corresponding to a load of 29.4 N in the load-elongation curve of the codes measured at 160°C into a value per dtex.

It is to be noted that the reason why the elastic modulus is measured at 160°C is because running at a higher speed results in the higher temperature of the interior of the tire, and the temperature of the belt reinforcing layer reaches 160°C at a time point when tire trouble occurs in high-speed running. In particular, a polyethylene terephthalate code has an elastic modulus that is more greatly decreased at high temperature than at ordinary temperature, even the code having high elasticity at ordinary temperature is incapable of expressing a sufficient effect of reinforcing a belt (effect of improving durability against protrusion input and effect of suppressing rising of belt) when it is impossible to maintain a high elastic modulus at high temperature, and therefore, an elastic modulus at high temperature has important significance. The setting of the elastic modulus of the codes, measured at 160°C at a load of 29.4 N, at 2.5 mN/(dtex·%) or more enables the plunger durability of the tire to be improved, and the rising amount of the belt in high-speed running to be suppressed, and results in a reduction in stress in stepping down/out of the tire to improve the handling stability of the tire in high-speed running.

Dip treatment under high tensile strength is preferred for improving the elastic modulus of the organic fiber codes at 160°C. Moreover, a tension set at $6.9 \times 10^{-2}$ N/tex or more in the case of performing adhesive treatment of the codes is preferred for allowing the codes to have sufficiently high elasticity. However, a method of enhancing the elasticity of a code is not limited thereto, and another method such as a reduction in twisting of a code can also be adopted. The adhesive treatment is a treatment that includes dry treatment, hot treatment, normalization treatment, and the like, and is performed by appropriately adjusting temperature and time as well as tension. The adhesive treatment may be performed by any of one-bath treatment or two-bath treatment, and is preferably performed by the two-bath treatment, and it is preferable to apply a tension of $6.9 \times 10^{-2}$ N/tex or more to the codes in the two-bath hot treatment.

The organic fiber codes preferably have a twist coefficient $\alpha$ of 500 to 2500, represented by the following expression:

$$\alpha = T \times D1/2$$

[wherein, $\alpha$ denotes a twist coefficient, T denotes the number of twists (twists/100 mm), and D denotes the total fineness (dtex) of the codes]. The constraining force of the filaments is increased to allow adhesion to be sufficient when the twist coefficient $\alpha$ of the organic fiber codes is 500 or more, and an elastic modulus sufficient for obtaining an effect of improving durability against protrusion input and an effect of suppressing rising of the belts 5 can be exhibited when the twist coefficient $\alpha$ is 2500 or less.

Moreover, the total fineness of the organic fiber codes is preferably 1000 to 3500 dtex. An elastic modulus sufficient for obtaining an effect of improving durability against protrusion input and an effect of suppressing rising of the belts can be exhibited when the total fineness of the codes is 1000 dtex or more, and placing can be allowed to be dense to sufficiently secure rigidity per unit width when the total fineness is 3500 dtex or less.

The raw material of the above-described organic fiber codes is not particularly limited, and may be derived from synthetic products, may be derived from organisms, may be derived from mechanically recycled products obtained by pulverizing, melting, and respinning PET products such as PET bottles, and may be derived from chemically recycled products obtained by depolymerizing and repolymerizing PET products such as PET bottles.

Like the illustrated tire 20, the tire 20 of the present invention may have a structure in which bead cores 10 are embedded in the bead sections 3, respectively, and the carcasses 4 are folded from the inner side to the outer side of the tire, and locked around the bead cores 10, may have a structure in which the carcasses 4 are coiled and locked around the bead cores 10 (not illustrated), and may have a structure in which the carcasses 4 are sandwiched and locked between bead wires from both sides (not illustrated), and any fixation method may be used. Further, in the tire 20 of the present invention, a tread pattern may be appropriately formed on the surface of the tread section 1, and an inner liner (not illustrated) may be formed on the innermost layer. Further, in the tire 20 of the present invention, air that is ordinary or has a varied oxygen partial pressure, or inert gas such as nitrogen can be used as a gas that is filled into the tire. The tire 20 of the present invention is preferred for a pneumatic tire for a car.

EXAMPLES

The tire of the present invention is described in more detail below with reference to Examples.

<Comparative Examples 1-3>

Belt edge separation durability and rolling resistance, and the moist heat adhesiveness of belt layers were evaluated using tires having belt structures set forth in the following Table 1, using coating rubbers of the belt layers set forth in the table, and having the type illustrated in FIG. 1. The tires were pneumatic tires each having a tire size of 265/65R18, and the belts were allowed to be two belt layers, and placed to cross each other at an angle of $\pm30°$ with respect to the circumferential direction of each tire. It is to be noted that with regard to the coating rubber, only the amount (part(s) by mass) of blended resin component, the amount (part(s) by mass) of blended methylene donor, and the kind and amount (part(s) by mass) of blended vulcanization accelerator are described in the table, and other components and the amounts (part(s) by mass) thereof are as set forth in the following Table 2.

<Examples 1 to 2>

Evaluation of belt edge separation durability and rolling resistance, and the moist heat adhesiveness of belt layers was predicted using tires having belt structures set forth in the following Table 1, using coating rubbers of the belt layers set forth in the table, and having the type illustrated in FIG. 1. A prediction method is as described in each evaluation item. It is to be noted that with regard to the coating rubber, only the amount (part(s) by mass) of blended resin component, the amount (part(s) by mass) of blended methylene donor, and the kind and amount (part(s) by mass) of blended vulcanization accelerator are described in the table, and other components and the amounts (part(s) by mass) thereof are as set forth in the following Table 2. It is to be noted that agents that are other than the blended agents described in Table 2 and are commonly blended in rubber compositions, such as zinc white, sulfur, and anti-aging agents, do not influence the effects of the present invention, therefore, are not described in the table, and may be appropriately added within ranges in which performance for rubber compositions for a tire does not deteriorate.

<Belt Edge Separation Durability>

<Comparative Examples 1 to 3>

After the degradation of each sample tire, the tire was filled with internal pressure and attached to a car for a test, the car was run on a BES drum while repeatedly applying a constant side force (SF), the tire was then dissected, and the length of a crack generated in an end of a belt layer was measured. The result obtained in the tire of Comparative Example 1 is set at 100, and the index of the result of each sample tire is set forth together in Table 1.

<Examples 1 to 2>

A belt layer in which the coating rubber of the belt layer used the blending of the present invention described in Table 2 and a belt layer in which the coating rubber of the belt layer used conventional blending described in Table 2 were mounted in each of two kinds of pneumatic tires having tire sizes 185/70R14 and 205/55R16, and the four kinds of the tires in total were prepared. It is to be noted that each tire has the common structure except the tire size and the coating rubber of the belt. The four kinds of the tires described above were used and tested under the same conditions as those in Comparative Examples 1 to 3, and the lengths of cracks in crossing belt layers were measured. As a result of comparison of the results, the lengths of the cracks were able to be decreased by an average of 16% in the case of using the blending of the present invention in comparison with the conventional blending, and therefore, the results of Examples 1 to 2 were presumed based on the measurement results of Comparative Examples 1 to 3, and described together as indices in Table 1.

<Rolling Resistance>

<Comparative Examples 1 to 3>

The internal pressure of each tire in which a rim was developed was set at 210 kPa, each tire was allowed to be according to ISO 28580, the load mass was set at 80% of the maximum load capacity, the tire was rolled at 80 km/h, and rolling resistance was measured and evaluated using a drum test machine having an iron plate surface having a diameter of 1.7 m. The obtained rolling resistance coefficients are set forth together in Table 1.

<Examples 1 to 2>

Like the evaluation of the belt edge separation durability, four kinds of tires were used and tested under the same conditions as those in Comparative Examples 1 to 3 to measure rolling resistance coefficients. As a result of comparison of the results, the rolling resistance coefficients were able to be decreased by an average of 2% in the case of using the blending of the present invention in comparison with the conventional blending, and therefore, the results of Examples 1 to 2 were presumed based on the measurement results of Comparative Examples 1 to 3.

<Moist Heat Adhesiveness of Belt Layer>

<Comparative Examples 2 to 3, Examples 1 to 2>

A steel cord-rubber composite formed by coating steel cords with vulcanized rubber including blended rubber compositions described in Table 2 was left unattended for 5 weeks in a thermo-hygrostat chamber maintained at a temperature of 100°C and a humidity of 95%, and was degraded, the amount of rubber adhering in the case of pulling off a steel cord was measured according to ASTM D 2229, and the heat resistive degradation adhesiveness of the degraded steel cords and coating rubber was indicated as an index based on the case of no hygrothermal degradation set at 100. The higher index value means higher adhesive strength between the steel cords and the coating rubber. It is to be noted that the thicknesses of all the steel cord-rubber composites are identical.

<Comparative Example 1>

A steel cord-rubber composite in which the thickness of the coating rubber gauge on the code is twice that in the steel cord-rubber composite of Comparative Example 2 is assumed. It is considered that commonly, air, water, and the like are inhibited from infiltrating a thicker treat layer, and the result of favorable moist heat adhesiveness is obtained, and adhesion performance in a case in which the thickness of the coating rubber gauge on the code became twice was assumed.

[Table 1]

| | Comparative Example 1 | Comparative Example 2 | Comparative Example 3 | Example 1 | Example 2 |
|---|---|---|---|---|---|
| Code structure | 1×5×0.225 (mm) | 1×5×0.225 (mm) | 1×5×0.225 (mm) | 1×5×0.225 (mm) | 1×5×0.225 (mm) |
| Center section of tire Thickness of first and second belt layers (mm) | 1.08 | 0.85 | 0.85 | 0.85 | 0.85 |
| Center section of tire Distance (mm) from both upper and lower surfaces of belt layer to code | 0.22 | 0.11 | 0.11 | 0.11 | 0.11 |
| b/a | 1.23 | 1.95 | 3.81 | 1.95 | 3.81 |
| Kind of vulcanization accelerator | DZ[*1] | DZ | DZ | CZ[*2] | CZ |
| Vulcanization accelerator (part(s) by mass) | 1.2 | 1.2 | 1.2 | 0.92 | 0.92 |
| Phenol resin [*3] (part(s) by mass) | 0 | 0 | 0 | 5 | 5 |
| Methylene donor [*4] (part(s) by mass) | 0 | 0 | 0 | 2.5 | 2.5 |
| Belt edge separation durability (index) | 100 | 111 | 69 | 94 | 57 |
| Rolling resistance coefficient (N/kN) | 7 | 6.8 | 6.9 | 6.7 | 6.8 |
| Moist heat adhesiveness of belt layer (index) | 60 | 50 | 50 | 60 | 60 |

[*1]: N,N'-dicyclohexyl-2-benzothiazylsulfenamide (trade name: NOCCELER DZ, manufactured by OUCHI SHINKO CHEMICAL INDUSTRIAL CO., LTD.)
[*2]: N-cyclohexyl-2-benzothiazolylsulfenamide (trade name: NOCCELER CZ, manufactured by OUCHI SHINKO CHEMICAL INDUSTRIAL CO., LTD.)
[*3]: Phenol-formaldehyde resin manufactured by Sumitomo Bakelite Co., Ltd.
[*4]: "CYREZ 964" manufactured by ALLNEX

[Table 2]

| Component (part(s) by mass) | Blending of the present invention Examples 1 to 2 | Comparative blending Comparative Examples 1 to 3 | Conventional blending |
|---|---|---|---|
| Natural rubber | 100 | 100 | 100 |
| Carbon black [*5] | 46 | 46 | 55 |
| Cobalt salt [*6] | 0.9 | 0.9 | 0.9 |
| Kind of vulcanization accelerator | Described in Table 1 | Described in Table 1 | DZ |
| Vulcanization accelerator | Described in Table 1 | Described in Table 1 | 1.2 |
| Phenol resin | Described in Table 1 | Described in Table 1 | 0 |

(continued)

| Component (part(s) by mass) | Blending of the present invention Examples 1 to 2 | Comparative blending Comparative Examples 1 to 3 | Conventional blending |
|---|---|---|---|
| Methylene donor | Described in Table 1 | Described in Table 1 | 0 |

*5: HAF grade carbon black, manufactured by Asahi Carbon Co., Ltd. "Asahi #70L", (DBP absorption amount: 75 cm³/100 g, nitrogen adsorption-specific surface area: 81 m²/g)
*6: "Manobond C", composite salt in which part of organic acid in cobalt salt of organic acid is replaced with boric acid, cobalt content: 22.0% by mass

Table 1 reveals that in the tire of the present invention, rolling resistance can be reduced by gauge thinning of a belt, and a reduction in durability in an end of a belt layer and the deterioration of the moist heat resistive adhesiveness of the belt layer can be suppressed.

DESCRIPTION OF SYMBOLS

20 Pneumatic tire (tire)
1 Tread section
2 Side wall section
3 Bead section
4 Carcass
5 Belt
5a, 5b Belt layer
6a, 6b Steel cord (code)
7 Coating rubber
8 Interbelt rubber
9 Belt reinforcing layer
9a Cap layer
9b Layered layer
10 Bead core

**Claims**

1. A pneumatic tire comprising: a belt layer comprising a first belt layer that is placed in an inner side of a tread section in a radial direction of the tire; and a second belt layer that is layered on an outer side of the first belt layer in a diametrical direction of the tire, wherein

   each of a thickness of the first belt layer and a thickness of the second belt layer in a center section of the tire is 1.00 mm or less,
   when a shortest distance between a code of the second belt layer and a code of the first belt layer in the center section of the tire is set at a, and a shortest distance between the code of the second belt layer in an end and the code of the first belt layer is set at b, a and b satisfy a relationship represented by the following expression:

$$1.8 \leq b/a \leq 4.0$$

   and
   a coating rubber that coats the first belt layer and the second belt layer comprises: a rubber component comprising natural rubber; a resin component; and a sulfenamide vulcanization accelerator.

2. The pneumatic tire according to claim 1, wherein each of a distance from both upper and lower surfaces of the first belt layer in the center section of the tire to a code and a distance from both upper and lower surfaces of the second belt layer in the center section to a code is 0.14 mm or less.

3. The pneumatic tire according to claim 1 or 2, wherein the sulfenamide vulcanization accelerator is N-cyclohexyl-2-benzothiazolylsulfenamide.

4. The pneumatic tire according to claim 3, wherein an amount of the blended N-cyclohexyl-2-benzothiazolylsulfenamide is 0.1 to 3.0 parts by mass with respect to 100 parts by mass of the rubber component.

5. The pneumatic tire according to claim 3 or 4, wherein a content of N-tert-butyl-2-benzothiazolylsulfenamide is 0.1 parts by mass or less with respect to 100 parts by mass of the rubber component.

6. The pneumatic tire according to any one of claims 1 to 5, wherein the resin component is a phenolic resin.

7. The pneumatic tire according to claim 6, wherein the phenolic resin is phenol-formaldehyde resin.

8. The pneumatic tire according to any one of claims 1 to 7, wherein an amount of the blended resin component is 0.1 to 10 parts by mass with respect to 100 parts by mass of the rubber component.

FIG. 1

FIG. 2

FIG. 3

## INTERNATIONAL SEARCH REPORT

| International application No. |
|---|
| **PCT/JP2022/038612** |

| A. | CLASSIFICATION OF SUBJECT MATTER |
|---|---|

*B60C 9/20*(2006.01)i; *B60C 1/00*(2006.01)i; *B60C 9/18*(2006.01)i; *C08K 5/44*(2006.01)i; *C08L 7/00*(2006.01)i; *C08L 61/00*(2006.01)i; *C08L 101/00*(2006.01)i
FI:   B60C9/20 J; B60C1/00 C; B60C9/18 K; B60C9/20 H; C08L7/00; C08L61/00; C08K5/44; C08L101/00; B60C9/20 E

According to International Patent Classification (IPC) or to both national classification and IPC

| B. | FIELDS SEARCHED |
|---|---|

Minimum documentation searched (classification system followed by classification symbols)

B60C9/20; B60C1/00; B60C9/18; C08K5/44; C08L7/00; C08L61/00; C08L101/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2013-199193 A (BRIDGESTONE CORP) 03 October 2013 (2013-10-03)<br>claims, examples 1, 3, 5 | 1-8 |
| Y | JP 2013-199192 A (BRIDGESTONE CORP) 03 October 2013 (2013-10-03)<br>claims, examples 1, 5-8 | 1-8 |
| Y | JP 2008-189048 A (BRIDGESTONE CORP) 21 August 2008 (2008-08-21)<br>claims, examples | 1-8 |
| Y | JP 2008-143484 A (BRIDGESTONE CORP) 26 June 2008 (2008-06-26)<br>claims, examples | 1-8 |
| Y | JP 2010-163055 A (BRIDGESTONE CORP) 29 July 2010 (2010-07-29)<br>claims, example 4 | 1-8 |
| Y | JP 2011-020644 A (BRIDGESTONE CORP) 03 February 2011 (2011-02-03)<br>claims, examples 1, 4, 5, 8, 9 | 1-8 |

☑ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 December 2022** | **10 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2022/038612** |

## C. DOCUMENTS CONSIDERED TO BE RELEVANT

| Category* | Citation of document, with indication, where appropriate, of the relevant passages | Relevant to claim No. |
| --- | --- | --- |
| Y | JP 2011-189872 A (BRIDGESTONE CORP) 29 September 2011 (2011-09-29) claims, examples 1-4 | 1-8 |
| Y | JP 2021-95071 A (BRIDGESTONE CORP) 24 June 2021 (2021-06-24) claims, paragraphs [0024]-[0026], [0030], [0034], [0042], examples | 1-8 |
| Y | JP 2013-87266 A (SUMITOMO RUBBER IND LTD) 13 May 2013 (2013-05-13) claims, paragraphs [0015], [0019], [0022], [0023], [0043]-[0047], examples | 1-8 |
| Y | JP 2013-181058 A (TOYO TIRE & RUBBER CO LTD) 12 September 2013 (2013-09-12) claims, paragraphs [0014], [0021], [0022], examples | 1-8 |

Form PCT/ISA/210 (second sheet) (January 2015)

**INTERNATIONAL SEARCH REPORT**
**Information on patent family members**

| | | International application No. |
|---|---|---|
| | | PCT/JP2022/038612 |

| Patent document cited in search report | | | Publication date (day/month/year) | Patent family member(s) | Publication date (day/month/year) |
|---|---|---|---|---|---|
| JP | 2013-199193 | A | 03 October 2013 | (Family: none) | |
| JP | 2013-199192 | A | 03 October 2013 | (Family: none) | |
| JP | 2008-189048 | A | 21 August 2008 | (Family: none) | |
| JP | 2008-143484 | A | 26 June 2008 | (Family: none) | |
| JP | 2010-163055 | A | 29 July 2010 | (Family: none) | |
| JP | 2011-020644 | A | 03 February 2011 | (Family: none) | |
| JP | 2011-189872 | A | 29 September 2011 | (Family: none) | |
| JP | 2021-95071 | A | 24 June 2021 | (Family: none) | |
| JP | 2013-87266 | A | 13 May 2013 | (Family: none) | |
| JP | 2013-181058 | A | 12 September 2013 | (Family: none) | |

Form PCT/ISA/210 (patent family annex) (January 2015)

**EP 4 434 766 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010163055 A

18